# EUROPEAN PATENT SPECIFICATION

(11) **EP 3 495 049 B1**
(45) Date of publication and mention of the grant of the patent: **06.01.2021**
(21) Application number: 18206236.4
(22) Date of filing: 14.11.2018
(51) Int. Cl.: B05B 12/00, A01M 7/00, B05B 7/12, B05B 7/24, B05B 15/40

(54) **ARRANGEMENT INTRODUCED IN 'JOYSTICK' TYPE CONTROL FOR USE IN PORTABLE MOTORIZED SPRAYERS**
ANORDNUNG IN EINER JOYSTICK-ARTIGEN STEUERUNG ZUR VERWENDUNG IN TRAGBAREN MOTORISIERTEN SPRÜHGERÄTEN
AGENCEMENT INTRODUIT DANS UNE COMMANDE DE TYPE « MANETTE » À UTILISER DANS DES PULVÉRISATEURS MOTORISÉS PORTATIFS

(30) Priority: 07.12.2017 BR 202017026366 U
(43) Date of publication of application: 12.06.2019
(73) Proprietor: Guarany Indústria e Comércio Ltda., 13308-200 Itú Sao Paulo (BR)
(72) Inventor: FLEURY BELLANDI, Alida Maria, Sao Paulo (BR)
(74) Representative: AOMB Polska Sp. z.o.o.

(56) References cited:
- EP-A1- 2 762 237
- WO-A1-2012/150614
- Anonymous: "Manual Cifarelli Modelo M1200", , 4 May 2016 (2016-05-04), XP055575738, Retrieved from the Internet: URL:https://www.slideshare.net/ingrismarly nbazancas/manual-cifarelli-modelo-m1200 [retrieved on 2019-03-29]

## Description

### FIELD OF APPLICATION

The present invention refers to a 'joystick' type control, for coupling to portable motorized sprayers with air assistance - as a rule, knapsack sprayers -, which integrates and enables the manual operation of the main machine control functions: acceleration/deceleration, activation of the electric circuit allowing the manual starting (via start-up) of the motor, interruption of motor operation ('stop'), opening and closing of the liquid/spray flow and safety lock (to prevent accidental acceleration, as well as to slow down the equipment and blocking the release of liquid to release/drop the hand of command position). Such a control is designed to be positioned in front of the operator in the equipment discharge/air outlet pipe, so that all the functions described above can be operated in the operating position of the machine by an operator wearing gloves. Buttons, triggers, and components that may require periodic cleaning and maintenance are designed and arranged so that their function(s), operating direction(s), operating mode(s) and removal (cleaning and maintenance), are obvious and simple to the user. In addition, the design of the grip - shape, dimensions and position/inclination - has ergonomic characteristics in order to be able to work for long hours.

### DESCRIPTION OF THE STATE OF THE ART

Within the state of the art, the search for the development and evolution of control systems that seek to integrate the main functions of operation into 'joystick' devices has been continuous; both for large equipment/machines (such as PI1005660 and BR 10 2015 014390 7) and for portable devices (for example, BR 10 2013 028694 0, BR 11 2013 028515 0 and MU 9001361-1).

When considering the portable equipment, it is possible to find 'joysticks' from toys to appliances in professional equipments in different work areas. In the professional field, when considering the agricultural and forestry sectors, in relation to the phytosanitary treatment and weed control of the various plantations, as well as the public health sector in the fight against insects vectors of human diseases, it is common the use of sprayers and for these sectors the development of control systems need to evolve by seeking the harmony between ergonomic and safe solutions to the operator, to attend to the laborious routine of this type of work, in which activities are carried out with high frequency of movement of the lower and upper limbs of the body conducting loads around 30kg and at the same time exposed to the climatic elements in conditions of irregular terrain/hiking and, as a rule, making use of toxic chemicals. In addition, the controls must evolve in order to assist in the correct/efficient spraying technique, with easy-to-understand controls and functions, ensuring an adequate level of safety regardless of the degree of instruction of the user being trained to operate it and also, such evolution should consider the ability to resist (have robustness) the aggressive conditions/media to which these devices are usually exposed and to have a low constructive complexity, which is more likely to be economically accessible, for example, to the small producer rural.

In the present state of the art there is a clear deficiency to be overcome in the designs of joysticks for this type of sprayers, which is the lack of complete integration between the main functions of operation: acceleration and deceleration of the motor; opening and closing of the liquid/spray outlet, and deactivation and blocking of the main functions in order to avoid accidental operation (either by the operator or even by spectators who may come into contact with the equipment).

Within the limitations described herein, it can be seen in the state of the art, for example, that there are still several air-assisted/pneumatic nozzle-type sprayers of standard origin in Asia, which do not have 'joystick', but only simple handles/grips coupled to the discharge pipe system, without any function (lever or button) for actuating a control; the controls being located in various positions and distant from the spray outlet pipe, which can generate discomfort and facilitate the occurrence of unsafe situations due to the fact that the operator needs to draw attention from the spray to activate or deactivate an operation function.

In the case of sprays with the presence of 'joystick' you can find some options, but none fully integrates all the functions mentioned above. As an example, there may be mentioned the patents EP 1886613A1 and US 7866571 - related to the same patent object - which contemplate a knapsack sprayer with combustion motor and air assist (blower) containing a `joystick'/grip; such 'joystick' has in its upper portion ("head") an acceleration control, a switch button for stopping the motor, a manual mechanical actuation element for opening and closing the fluid passage, and finally, a pivoting lever which has an internal connection with the switch button and the throttle control, which allows the motor to be turned off when pressed in one direction or to lock/block acceleration in certain ranges (including maximum) when operated in the opposite direction of the other function. However, such patents do not exhibit the deactivation and blocking commands of the main functions in order to avoid its accidental activation, as well as, it does not have the system of automatic closing of the passage/opening of the spray liquid; which system is one of the main differentials - see more details in the functional description - of the present patent.

Another model is contemplated in the MU 9001361-1 and differs from the novelty proposed both in its constructive arrangement, which positions the handle/grip and main commands in horizontal position, as well as in the integration of all safety and application functions (spraying) itself; since similarly to patents EP 1886613A1 and US 7866571 there is an acceleration control, a stop button for the motor, a manual mechanical actuation element for opening and closing the liquid passage, and as the main differential in relation to the patents EP 1886613A1 and US 7866571 - in addition to the horizontal constructive arrangement - allows the automatic closing of the valve that controls the flow (open/close) of liquid, i.e. without the need for manual mechanical actuation to occur closing. However, such a utility model is also deficient in the integration of all functions, especially due to the lack of commands to deactivate and block the main functions, for example, there is no system description that acts to decelerate automatically if the operator releases - accidentally or incidentally - from the control/handle.

An even more recent document (WO 2012/150614 A1), which reports a portable "spray"/blower type agricultural device/apparatus, brings claims for a joystick type grip/handle, with a greater integration between functions, in this case presenting kinematic actuation mechanisms interconnected to the throttle trigger and to the flow control valve (opening and closing of the liquid passage) that allows a synchronized actuation of the components and, as a result, there is loss of contact between the operator's hand and the trigger flow control valve closes together with equipment deceleration. However, unlike the model proposed here, the mechanism of synchronized actuation of WO 2012/150614 A1, despite bringing an evolution by presenting mechanisms of rapid deactivation of functions (acceleration and application/spraying), still lacks locking mechanisms of these functions, as previously described, in order to prevent accidental acceleration, as well as to decelerate the equipment and block the release of liquid when releasing/dropping the hand from the command position. Furthermore, it does not describe maintenance/cleaning facilities for components that require periodicity of such operations and which also have relation to operator safety.

### OBJECTIVE OF THE MODEL

The present invention provides a joystick type control according to claim 1. The improvement is intended to provide an air-assisted portable power spray with a joystick-type control solution which comprises: the main operating functions of this type of sprayer, extending safety aspects through minimization of risks by including safety functions/components (deactivation and blocking actions/components) interconnected to the main operating functions and also, with ergonomic characteristics (shape, dimensions and position/inclination) in the handle of the control in order to make able to work for long hours. In addition, buttons, triggers and components such as the filter (16) and liquid valve (14) - which may require periodic cleaning and maintenance - are designed and arranged so that their function(s), direction(s) of operation and removal (in the case of items 14 and 16), are obvious and simple for all types of persons, regardless of the degree of instruction of the user to be trained to operate it.

### BRIEF DESCRIPTION OF THE DRAWINGS

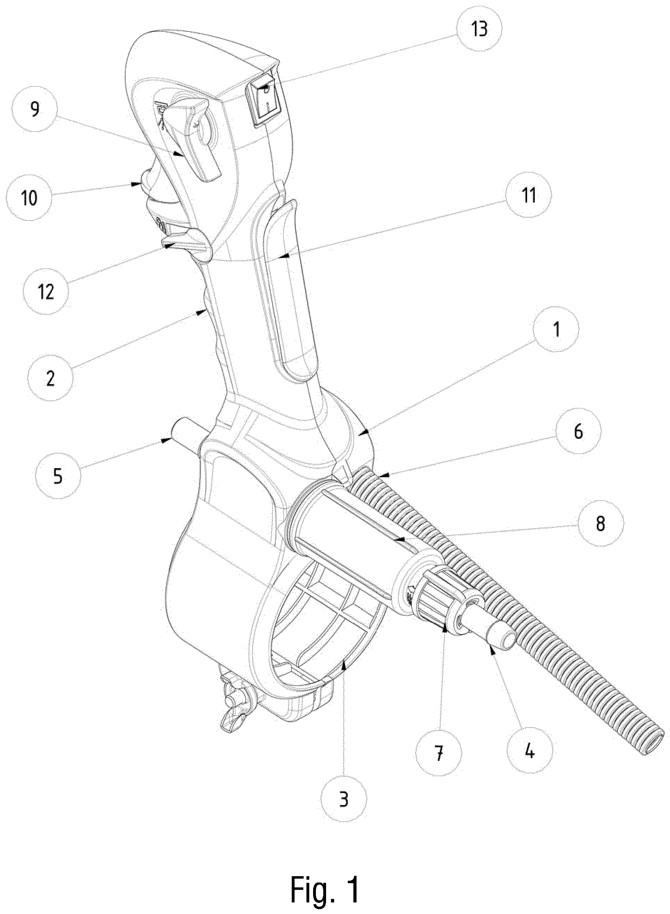

Figure 1 shows a perspective view of the joystick-type control, with details of the arrangement of its elements.

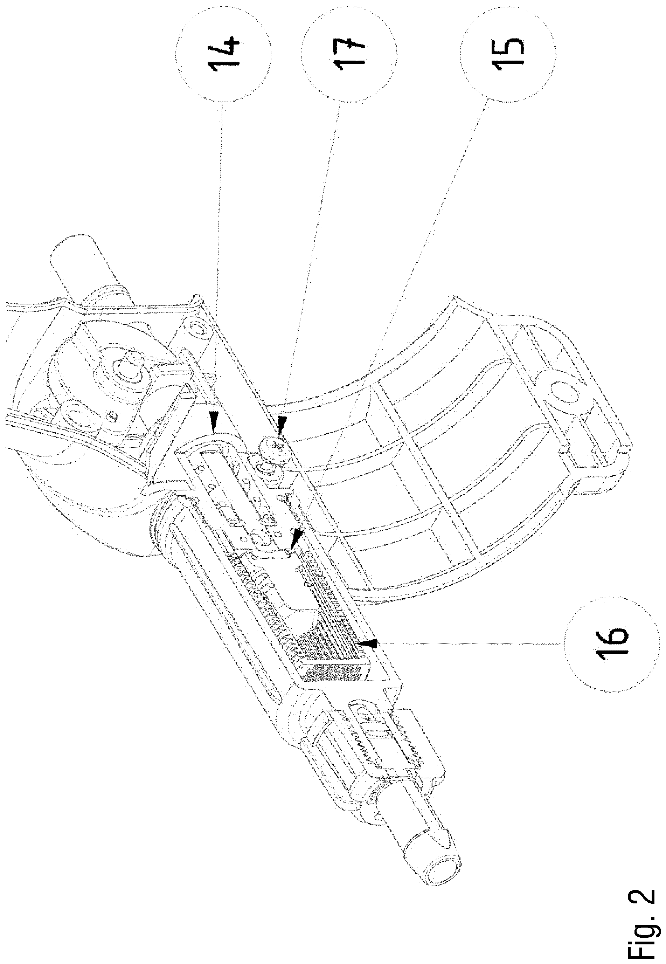

Figure 2 shows a cross-sectional view of the joystick control, particularly the filtering (16) and liquid flow opening/closing valve (14, 15 and 17) systems.

### DETAILED DESCRIPTION OF THE FIGURES

### System operation

The 'joystick' type control command is basically composed of a body (1) in which are fixed all operation and safety functions and, in its central part, a handle (2), with ergonomic characteristics (shape, dimensions and position/inclination). The lower end of the control (3) is designed to engage, through a locking and tightening system with butterfly nut and screw, in air discharge tubing of portable motorized air-assisted sprayers - as a rule, knapsack sprayers - and, at its distal rear end is constituted by a pin (4) for hose coupling connected to a source/reservoir of liquids; at the opposite end of the pin (4) is the liquid outlet pin (5) for coupling the hose connecting the system to the spray nozzle. At the rear portion is the fixture of the conduit (6) containing inside it the throttle cable and the wires of the sprayer operating switch system, which are connected at another end to the motor of the equipment. The assembly also has a housing for the liquid filter (16) at the rear portion. This filter (16) can be easily removed for cleaning by releasing its threaded cover (8), even with a full reservoir, due to the presence of an open/closed register (7) of fluid passage from the hose attached to the source/reservoir.

With the control being held by the user in the operating position, the lever (9), the throttle trigger (10) and the switch button (13) located in the upper portion ("head") of the joystick may be actuated by the fingers of the own hand that holds/wields the device.

The switch button (13) has two positions, one promotes the activation of the electric circuit allowing the manual starting (via start-up) of the motor, the other, interrupts/closes the electric circuit, causing the operation interruption of the motor ('stop') and consequently of all the spraying equipment.

With the sprayer in operation and the register (7) open, the control of the liquid flow (open/closed) to be sprayed occurs by means of a liquid valve (14) mounted inside the body (1), the same having its opening and closing commands actuated by actuation on a lever (9) located on the upper side, said lever, when pressed down, releases the liquid flow and, when pressed/pushed up, closes the valve interrupting the passage from the liquid to the spray nozzle. This liquid valve (14) is fixed to the body (1) in such a way that it can be disassembled by simply removing a screw (17), it being not necessary to disassemble the whole assembly to make any repairs to the seal (15), which simplifies maintenance of the 'joystick' liquid circuit. Still considering the sprayer in operation, to promote the exit of a high velocity air flow that will be responsible for fractionating the liquid in small drops of spray and directing the droplets to the target area, one must press the throttle trigger (10). By pressing the trigger fully (maximum acceleration) it is possible to hold it in this position by pressing down the locking lever (12), which provides less operator fatigue during prolonged operations.

A safety lock (11) is longitudinally provided at the rear of the handle, which gives rise to a safety system which enables the present 'joystick' to be distinguished from the state of the art due to its interconnection with the throttle trigger (10) and with the lever (9). Such a safety lock (11) when not actuated/pressed blocks the triggering of the trigger (10) and prevents the lever (9) from being attached to the open position, which is important in order to avoid accidental (acceleration and spraying) triggering, by the operator and/or spectators - including children - who may come into contact with the spray equipment. Accordingly, the acceleration of the equipment and attachment of the lever (9) in the open position to keep the liquid valve (14) open depends first on the engagement of the safety lock (11), which must be tightened and held allow air-assisted spraying and then also enable the locking Lever (12) to resume its function. The need for three independent actions to activate spraying of the liquid to be applied is a differential way of minimizing risks because it significantly reduces the probability of occurrence of the operation other than the user trained for use. In addition, the position/location and distance between them, of the three functional components: the lever (9), the throttle trigger (10) and the safety lock (11) do not allow them to be actuated by only one hand in the case of small children's hands, which makes it even more difficult to accidentally drive this risk group. Finally, said interconnection of the components also has a distinctive feature in that the action of "releasing the hand from the handle", that is, releasing the safety lock (11) during operation; because concomitantly to such an action occurs the deceleration of the motor, that is, the trigger (10) returns to the "idle" position (low acceleration) and is locked in this position, as well as the lever (9) automatically returns to the closed position, interrupting the release/spray of liquid. This final action of the 'joystick' safety systems minimizes or even avoids risk of injury and contamination to the operator and also from contamination of the environment in the event of accidents related to the user during application/spraying, such as in the occurrence of a drop or even a sudden malfunction, when the operator then releases the 'joystick'/device hand without the time to press the switch button (13) in the stop position ('stop').

## Claims

1. Joystick type control for use in a portable motorized sprayer, wherein
the control comprises a body (1) in which are fixed all operation and safety functions, of the control;
the control comprises in its central part a handle (2), with ergonomic characteristics;
a lower end of the control (3) comprises a locking and tightening system with a butterfly nut and a first screw for connection to an air discharge tubing of the portable motorized sprayer;
the control further comprises a liquid inlet pin (4) for connection to a hose connected to a source or reservoir of liquids, a liquid outlet pin (5) for connection to a hose which joins the entire control to a spray nozzle, a fixture of a conduit (6), and a liquid filter housing (16) which is provided with a threaded cover (8) and an open or closed register (7);
the body (1) has in its upper portion a valve lever (9), a throttle trigger (10), a switch button (13) and a locking lever (12), the button having two positions;
a liquid valve (14) located inside the body (1) has its opening and closing commands actuated by actuation on the valve lever (9) located in the upper portion, said liquid valve (14) is fixed in the body (1) by a second screw (17), facilitating the repair of a seal (15);
further the throttle trigger (10) can be locked in a position of maximum acceleration, when the locking lever (12) is pressed down;
the control further comprises a safety lock (11) interconnected with the throttle trigger (10) and the valve lever (9), wherein the safety lock (11) is installed longitudinally in a rear part of the handle.

## Patentansprüche

1. Knüppelartige Steuerung zur Verwendung in einer tragbaren motorisierten Sprüheinrichtung, bei der:
die Steuerung einen Körper (1) aufweist, in dem alle Betriebs- und Sicherheitsfunktionen der Steuerung befestigt sind;
die Steuerung in ihrem Mittelteil einen Griff (2) mit ergonomischen Eigenschaften aufweist;
ein unteres Ende der Steuerung (3) ein Verriegelungs- und Festziehsystem mit einer Flügelmutter und einer ersten Schraube zur Verbindung mit einer Luftauslassrohrleitung der tragbaren motorisierten Sprüheinrichtung aufweist;
die Steuerung ferner einen Flüssigkeitseinlassstift (4) zur Verbindung mit einem Schlauch, der mit einer Quelle oder einem Reservoir für Flüssigkeiten verbunden ist, einen Flüssigkeitsauslassstift (5) zur Verbindung mit einem Schlauch, der die gesamte Steuerung und eine Sprühdüse aneinander anfügt, eine Halterung einer Leitung (6) und ein Flüssigkeitsfiltergehäuse (16) aufweist, das mit einer mit einem Gewinde versehenen Abdeckung (8) und einem offenen oder geschlossenen Register (7) bereitgestellt ist;
der Körper (1) in seinem oberen Abschnitt einen Ventilhebel (9), eine Drosselauslöseeinrichtung (10), eine Umschalttaste (13) und einen Verriegelungshebel (12) mit zwei Stellungen aufweist;
die Öffnungs- und Schließbefehle eines Flüssigkeitsventils (14), das sich in dem Körper (1) befindet, durch Betätigung an dem Ventilhebel (9), der sich dem oberen Abschnitt befindet, betätigt werden, wobei das Flüssigkeitsventil (14) durch eine zweite Schraube (17) in dem Körper (1) befestigt ist, wodurch sich die Reparatur einer Dichtung (15) erleichtert;
die Drosselauslöseeinrichtung (10) ferner in einer Stellung einer maximalen Beschleunigung verriegelt werden, wenn der Verriegelungshebel (12) nach unten gedrückt wird;
die Steuerung ferner ein Sicherheitsschloss (11) aufweist, das mit der Drosselauslöseeinrichtung (10) und dem Ventilhebel (9) verbunden ist, wobei das Sicherheitsschloss (11) längs in einem rückseitigen Teil des Griffes eingebaut ist.

## Revendications

1. Commande de type manette à utiliser dans un pulvérisateur motorisé portable, dans laquelle
la commande comprend un corps (1) dans lequel sont fixées toutes les fonctions d'actionnement et de sécurité de la commande;
la commande comprend, dans sa partie centrale, une poignée (2) à caractéristiques ergonomiques;
une extrémité inférieure de la commande (3) comprend un système de verrouillage et de serrage avec un écrou papillon et une première vis pour la connexion à un tube d'évacuation d'air du pulvérisateur motorisé portable;
la commande comprend par ailleurs une broche d'entrée de liquide (4) destinée à être connectée à un tuyau connecté à une source ou un réservoir de liquides, une broche de sortie de liquide (5) destinée à être connectée à un tuyau qui relie l'ensemble de la commande à une buse de pulvérisation, un moyen de fixation d'un conduit (6) et un boîtier de filtre de liquide (16) qui est pourvu d'un couvercle fileté (8) et d'un moyen de repérage ouvert ou fermé (7);
le corps (1) présente, dans sa partie supérieure, un levier de soupape (9), une gâchette d'accélérateur (10), un bouton de commutation (13) et un levier de verrouillage (12), le bouton présentant deux positions;
une soupape de liquide (14) située à l'intérieur du corps (1) présente ses commandes d'ouverture et de fermeture actionnées par actionnement sur le levier de soupape (9) situé dans la partie supérieure, ladite soupape de liquide (14) est fixée dans le corps (1) par une deuxième vis (17), facilitant la réparation d'un joint (15);
par ailleurs, la gâchette d'accélérateur (10) peut être verrouillée dans une position d'accélération maximale, lorsque le levier de verrouillage (12) est poussé vers le bas;
la commande comprend par ailleurs un verrou de sécurité (11) interconnecté avec la gâchette d'accélérateur (10) et le levier de soupape (9), où le verrou de sécurité (11) est installé longitudinalement dans une partie arrière de la poignée.
